(19) **Europäisches Patentamt / European Patent Office / Office européen des brevets**

(11) **EP 3 681 114 A1**

(12) **EUROPEAN PATENT APPLICATION**
published in accordance with Art. 153(4) EPC

(43) Date of publication:
**15.07.2020 Bulletin 2020/29**

(21) Application number: **17923992.6**

(22) Date of filing: **07.09.2017**

(51) Int Cl.:
*H04L 27/26* (2006.01)      *H04W 52/14* (2009.01)
*H04W 72/04* (2009.01)

(86) International application number:
**PCT/JP2017/032323**

(87) International publication number:
**WO 2019/049280 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **NTT DOCOMO, INC.**
**Chiyoda-ku**
**Tokyo 100-6150 (JP)**

(72) Inventors:
• **TAKEDA, Kazuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL AND RADIO COMMUNICATION METHOD**

(57)    When a UL control channel of a time duration shorter than those of legacy LTE systems (e.g., LTE Rel. 8 to 13) is introduced, a UL data channel is appropriately transmitted while improving resource use efficiency. A user terminal according to the present invention includes: a receiving section that receives Downlink Control Information (DCI); and a control section that controls transmission of an Uplink (UL) data channel in a first resource indicated by the DCI, and a second resource for an Uplink (UL) control channel is reserved in at least part of the first resource such that the UL data channel is not transmitted by a non-contiguous frequency resource.

## FIG. 2A

**Description**

Technical Field

The present invention relates to a user terminal and a radio communication method of a next-generation mobile communication system.

Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE Advanced (LTE-A), Future Radio Access (FRA), 4G, 5G, 5G+ (plus), New RAT (NR), and LTE Rel. 14 and 15~) have been also studied.

On Downlink (DL) of legacy LTE systems (e.g., LTE Rel. 8 to 13), a DL control channel (e.g., PDCCH: Physical Downlink Control Channel) and a DL data channel (e.g., PDSCH: Physical Downlink Shared Channel) for a certain user terminal (UE: User Equipment) are allocated to different symbols in 1 Transmission Time Interval (TTI).

Furthermore, on Uplink (UL) of the legacy LTE systems (e.g., LTE Rel. 8 to 13), a UL control channel (also referred to as, for example, a PUCCH: Physical Uplink Control Channel or a long PUCCH) is allocated to resources determined based on an index of allocation resources (e.g., Control Channel Elements (CCEs)) of the DL control channel. The UL control channel is allocated to all symbols (or all symbols except a last symbol) in a TTI in both end domains of a system band.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

Various methods for multiplexing a control channel and a data channel have been studied for future radio communication systems (e.g., LTE Rel. 14 or subsequent releases, LTE 5G and NR) to improve resource use efficiency. For example, it has been studied for DL to perform Frequency Division Multiplexing (FDM) on a DL control channel and a DL data channel in an identical symbol.

On the other hand, it has been studied for UL of the future radio communication systems to introduce a UL control channel (also referred to as, for example, a PUCCH or a short PUCCH) of a time duration (e.g., 1 or 2 symbols) shorter than those of legacy LTE systems (e.g., LTE Rel. 8 to 13). In a case where the UL control channel of the shorter time duration is introduced, a problem is how to multiplex the UL control channel and a UL data channel (e.g., PUSCH: Physical Uplink Shared Channel).

For example, there is a risk that, when the UL control channel and the UL data channel are subjected to Time Division Multiplexing in different symbols, resource use efficiency lowers. On the other hand, there is a risk that, when the UL control channel and the UL data channel are subjected to frequency division multiplexing in an identical symbol without a restriction to improve resource use efficiency, the UL data channel cannot be appropriately transmitted.

The present invention has been made in light of this point, and one of objects of the present invention is to provide a user terminal and a radio communication method that can appropriately transmit a UL data channel while improving resource use efficiency when a UL control channel of a time duration shorter than those of legacy LTE systems (e.g., LTE Rel. 8 to 13) is introduced.

Solution to Problem

One aspect of a user terminal according to the present invention includes: a receiving section that receives Downlink Control Information (DCI); and a control section that controls transmission of an Uplink (UL) data channel in a first resource indicated by the DCI, and a second resource for an Uplink (UL) control channel is reserved in at least part of the first resource such that the UL data channel is not transmitted by a non-contiguous frequency resource.

Advantageous Effects of Invention

According to the present invention, it is possible to appropriately transmit a UL data channel while improving resource use efficiency when a UL control channel of a time duration shorter than those of legacy LTE systems (e.g., LTE Rel. 8 to 13) is introduced.

Brief Description of Drawings

Figs. 1A and 1B are diagrams illustrating one example of multiplexing of a control channel and a data channel in a future radio communication system.
Figs. 2A to 2D are diagrams illustrating one example of multiplexing of a PUCCH and a PUSCH according to the present embodiment.
Fig. 3 is a diagram illustrating one example of control of PUCCH resources according to the present embodiment.
Fig. 4 is a diagram illustrating one example of a schematic configuration of a radio communication system according to the present embodiment.
Fig. 5 is a diagram illustrating one example of an overall configuration of a radio base station according to the present embodiment.
Fig. 6 is a diagram illustrating one example of a function configuration of the radio base station according to the present embodiment.
Fig. 7 is a diagram illustrating one example of an overall configuration of a user terminal according to the present embodiment.
Fig. 8 is a diagram illustrating one example of a function configuration of the user terminal according to the present embodiment.
Fig. 9 is a diagram illustrating one example of hardware configurations of the radio base station and the user terminal according to the present embodiment.

Description of Embodiments

For future radio communication systems (e.g., LTE Rel. 14 or subsequent releases, LTE 5G and NR), various methods for multiplexing control channels (a DL control channel and/or a UL control channel) and data channels (a DL data channel and/or a UL data channel) have been studied to improve resource use efficiency.

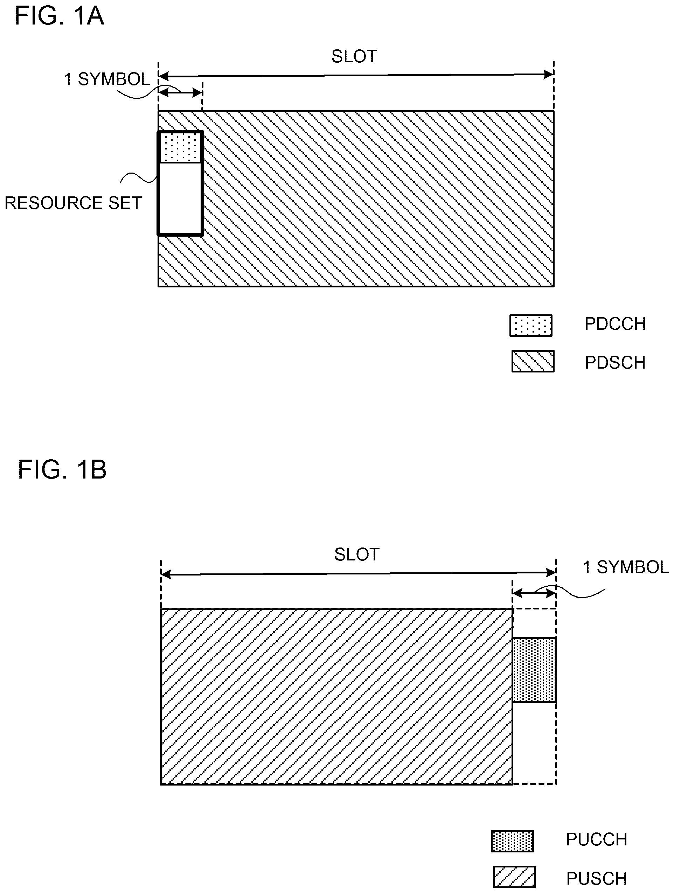

Fig. 1 is a diagram illustrating one example of multiplexing of a control channel and a data channel in the future radio communication system. Fig. 1A illustrates one example of multiplexing of a DL control channel (also referred to as a PDCCH below) and a DL data channel (also referred to as a PDSCH below). As illustrated in Fig. 1A, the PDCCH and the PDSCH may be subjected to frequency division multiplexing in an identical symbol.

In Fig. 1A, one or more resource sets including resources to which the PDCCH is allocated may be configured to a user terminal by a higher layer signaling (e.g., RRC signaling). In this case, the PDSCH may be allocated to resources (e.g., Resource Elements (REs)) other than the one or more resource sets. The resource set will be also referred to as, for example, a Control Resource Set (CORESET), a control subband, a search space set, a search space resource set or a control domain.

Alternatively, one or more source set candidates may be configured by a higher layer signaling, or one of the candidates may be indicated by a physical layer signaling (e.g., Downlink Control Information (DCI)). In this case, the PDSCH may be allocated to resources other than the resource set indicated by the DCI.

Thus, the various methods for multiplexing the PDCCH and the PDSCH have been studied to improve resource use efficiency. On the other hand, a method for multiplexing a UL control channel of a time duration (e.g., a small number of symbols such as 1 or 2 symbols) that is introduced in the above future radio communication systems and is shorter than those of legacy LTE systems (LTE Rel. 8 to 13), and a UL data channel has not been sufficiently studied.

Fig. 1B illustrates one example of multiplexing of a UL control channel (also referred to as a PUCCH below) and a UL data channel (also referred to as a PUSCH below). In addition, in Fig. 1B, the PUCCH includes 1 symbol, yet may include 2 or more symbols. Furthermore, in Fig. 1B, the PUCCH is allocated to an end of a slot, yet may be allocated to any symbol in the slot.

When the PUCCH and the PUSCH are allocated (time division multiplexing) to different symbols in an identical slot as illustrated in Fig. 1B, there is a risk that there may be unused resources in PUCCH allocation symbols, and therefore resource use efficiency lowers. However, when the PUSCH is multiplexed on the PUCCH allocation symbols without a restriction in Fig. 1B to improve the resource use efficiency, there is a risk that the PUSCH cannot be appropriately transmitted.

Hence, the inventors of this application have studied a method that makes it possible to appropriately transmit a PUSCH while improving resource use efficiency in a case where a PUCCH of a time duration shorter than those of the legacy LTE systems (LTE Rel. 8 to 13) is introduced, and invented the present invention. More specifically, the inventors of this application have conceived reserving PUCCH resources to at least part of resources to be allocated to a PUSCH such that the PUSCH is not transmitted by non-contiguous frequency resources.

The present embodiment will be described below. Hereinafter, the PUCCH includes 1 symbol of the PUSCH, yet is not limited to this. The PUCCH only needs to include one or more identical and/or different symbols to and/or from a subcarrier-spacing of the PUSCH. Furthermore, the PUCCH is allocated to an end of a slot, yet is not limited to this, and may be allocated to any symbol in the slot.

According to the present embodiment, the user terminal monitors (blind-decodes) candidates (search spaces) in a resource set (e.g., CORESET) reserved for the PDCCH, and receives (detects) DCI (also referred to as, for example, a UL grant or the PDCCH) for the user terminal. The user terminal controls transmission of the PUSCH in resources (time resources (e.g., a given number of symbols) and/or frequency resources (that include, for example, Physical Resource Blocks (PRBs) and will be also referred to as, for example, first resources) indicated by the DCI.

(Reservation of PUCCH Resources)

The present embodiment will describe reservation of PUCCH resources. The PUCCH resources include time resources (e.g., a given number of symbols) and/or frequency resources (e.g., PRBs), and may be referred to as, for example, PUCCH resources or second resources.

According to the present embodiment, the PUCCH resources are reserved such that a PUSCH is not transmitted by non-contiguous frequency resources. Consequently, even when Discrete Fourier Transform-Spread-Orthogonal Frequency Division Multiplexing (DFT-s-OFDM) waveform (also referred to as, for example, DFT spreading (DFT precoding)) is applied to UL, it is possible to prevent an increase in a Peak to Average Power Ratio caused due to transmission of the PUSCH in the non-contiguous frequency resources.

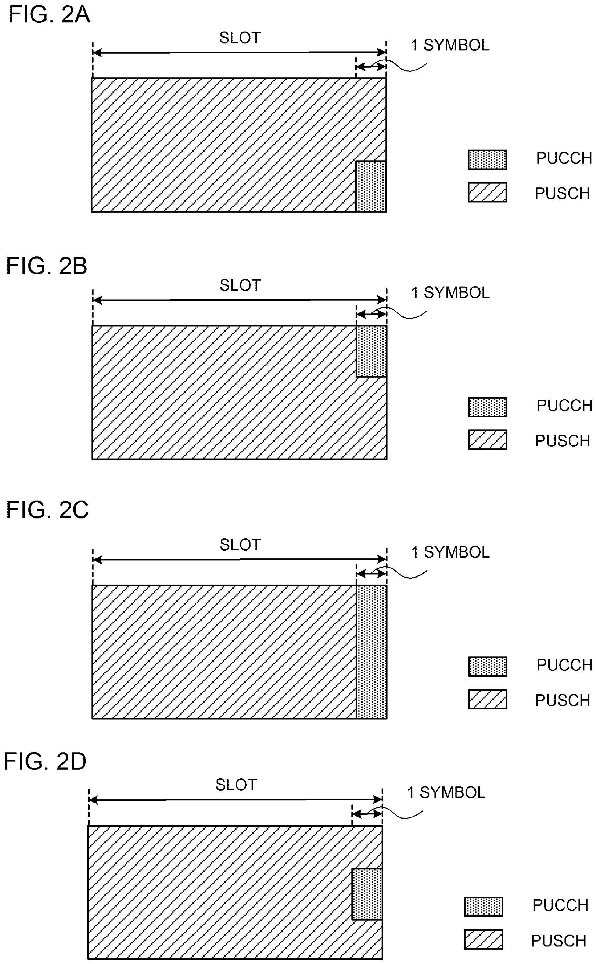

Fig. 2 is a diagram illustrating one example of multiplexing of a PUCCH and a PUSCH according to the present embodiment. Figs. 2A to 2D illustrate slots for which PUSCHs have been scheduled. In addition, in Figs. 2A to 2D, the PUSCH is transmitted from a head of the slot, yet is not limited to this, and the PUSCH may be transmitted in a given number of symbols.

As illustrated in Figs. 2A and 2B, a given number of PRBs that are part of all PRBs indicated by a UL grant, and continue from a PRB of the lowest (or highest) index may be reserved as PUCCH resources in a given symbol in a slot (a last symbol of the slot in this case) to which the PUSCH is allocated.

In Figs. 2A and 2B, the user terminal may puncture and/or rate-match the PUSCH for the reserved PUCCH resources in the given symbol. In addition, in Figs. 2A and 2B, the PUCCH resources may be reserved so as to include PRBs (not illustrated) that do not overlap the PUSCH. The same applies to Fig. 2C, too.

Furthermore, as illustrated in Fig. 2C, all PRBs indicated by a UL grant may be reserved as PUCCH resources in a given symbol in a slot (a last symbol of the slot in this case) to which the PUSCH is allocated. In Fig. 2C, the user terminal may stop transmission of the PUSCH in the given symbol. In this case, similar to the cases in Figs. 2A and 2B, the user terminal may puncture and/or rate-match the PUSCH for the reserved PUCCH resources in the given symbol.

On the other hand, as illustrated in Fig. 2D, a given number of PRBs that are part of all PRBs indicated by a UL grant and do not include a PRB of the lowest (or highest) index is not permitted to be reserved in a given symbol in a slot (a last symbol of the slot in this case) to which the PUSCH is allocated. This is because, in Fig. 2D, the PUSCH is transmitted by non-contiguous PRBs in the given symbol, and there is a risk that a PAPR increases.

If a relationship between a temporarily scheduled PUSCH and reserved resources is as illustrated in Fig. 2D (i.e., resources of the scheduled PUSCH are non-contiguous PRBs), the user terminal may determine one of the non-contiguous PRBs as a resource to which a PUSCH is not additionally allocated. In this case, the resource to which the PUSCH is not additionally allocated may be defined as a resource close to one of an upper end and a lower end of a frequency, may be decided and determined by the user terminal, or may be a resource of a smaller number of PRBs among an individual PRB group of contiguous PRBs. When the PUSCH is not additionally allocated to a group of a smaller number of PRBs, it is possible to minimize deterioration of a throughput or an error rate of the PUSCH due to a decrease in the PUSCH resources.

As described above, according to the present embodiment, the PUCCH resources are reserved such that the PUSCH is not transmitted by non-contiguous frequency resources, so that it is possible to transmit the PUSCH without increasing a PAPR while improving resource use efficiency.

(Transmission Power Control)

Next, transmission power control of a PUSCH according to the present embodiment will be described. In the legacy LTE systems (LTE Rel. 8 to 13), transmission power $P_{PUSCH, c}(i)$ of the PUSCH in a TTIi of a cell c can be expressed by following equation (1).

[Mathematical 1]

$$P_{PUSCH,c}(i) = \min \left\{ \begin{array}{l} P_{CMAX,c}(i), \\ 10\log_{10}(M_{PUSCH,c}(i)) + P_{O\_PUSCH,c}(j) + \alpha_c(j) \cdot PL_c + \Delta_{TF,c}(i) + f_c(i) \end{array} \right\} \text{[dBm]}$$

In this regard, $P_{CMAX, c}(i)$ is maximum transmission power of the user terminal. $M_{PUSCH, c}(i)$ is a bandwidth (e.g., the number of PRBs) allocated to the PUSCH. $P_{0\_PUSCH, c}(j)$ is a parameter (e.g., a parameter related to a transmission power offset) (referred to as a target received power parameter below) related to target received power (target received SNR: Signal to Noise Ratio). $\alpha_c(j)$ is a weight coefficient of a fractional Transmission Power Control (TPC). $PL_c$ is path-loss (propagation loss). $\Delta_{TF, c}(i)$ is an offset based on a modulation scheme and a code rate (MCS: Modulation and Coding Scheme) to be applied to the PUSCH. $f_c(i)$ is a correction value of a TPC command.

However, the legacy LTE systems (LTE Rel. 8 to 13) does not assume that a bandwidth (e.g., the number of PRBs) that can be used for transmission of a PUSCH changes in a slot to which the PUSCH is allocated as illustrated in Figs. 2A and 2B. Therefore, a problem is how to control transmission power of the PUSCH in a given symbol that can use only part of a bandwidth allocated by DCI for transmission of the PUSCH as illustrated in Figs. 2A and 2B.

According to the present embodiment, the user terminal may control the transmission power of the PUSCH in a symbol in which PUCCH resources are reserved, based on identical and/or different parameters to and/or from those of other symbols in which the PUCCH resources are not reserved.

<First Transmission Power Control>

According to the first transmission power control, the user terminal may control transmission power of a PUSCH such that a Power Spectral Density (PSD) is fixed between a symbol in which PUCCH resources are reserved and other symbols in which the PUCCH resources are not reserved.

For example, in symbols that can use an entire bandwidth allocated by DCI for transmission of the PUSCH (i.e., symbols in which the PUCCH resources are not reserved such as symbols other than the last symbol in the slot in Figs. 2A and 2B), the user terminal appropriates equation (1) used by the legacy LTE systems, and control the transmission power of the PUSCH. In this regard, "appropriation" means using at least one of parameters of the above-described equation. When the parameters are "appropriated", it is permitted to change meanings of subscripts (e.g., i and c in equation (1)) and meanings of part the parameters.

More specifically, the user terminal only needs to control the transmission power of the PUSCH based on at least one of maximum transmission power ($P_{CMAX, c}(i)$), a bandwidth ($M_{PUSCH, c}(i)$) allocated to the PUSCH, a target received power parameter ($P_{0\_PUSCH, c}(j)$), a weight coefficient ($\alpha_c(j)$) of a fractional TPC, a path loss ($PL_c$), an offset ($\Delta_{TF,c}(i)$) based on an MCS to be applied to the PUSCH, and a correction value ($f_c(i)$) of a TPC command.

On the other hand, in a symbol that can use only part of the bandwidth allocated by the DCI for transmission of the PUSCH (i.e., the symbol in which the PUCCH resources are reserved such as the last symbol in the slot in Figs. 2A and 2B), the user terminal may control the transmission power of the PUSCH by using parameters different from those of the symbol that can use the entire bandwidth for transmission of the PUSCH. The parameters may include, for example, a ratio of the number of PRBs in a case where all PRBs allocated in the symbol can be used for transmission, and the number of PRBs that are actually used for transmission in the symbol.

According to first transmission power control, when the PUCCH resources are reserved and therefore a bandwidth (the number of PRBs) that can be used for transmission of the PUSCH decreases, the transmission power of the PUSCH also decreases. As a result, even in the cases illustrated in Figs. 2A and 2B, it is possible to make a PSD between symbols in a slot fixed. Consequently, it is possible to prevent an increase of an interference with other user terminals in symbols in which PUCCH resources have been reserved.

<Second Transmission Power Control>

According to second transmission power control, the user terminal may control the transmission power of the UL data channel such that transmission power per symbol is fixed.

For example, irrespectively of whether or not symbols are symbols (the symbols other than the last symbol in the slot in Figs. 2A and 2B) that can use the entire bandwidth allocated by the DCI for transmission of the PUSCH (or whether or not the symbol is a symbol (the last symbol in the slot in Figs. 2A and 2B) that can use part of the bandwidth for transmission of the PUSCH), the user terminal may appropriate equation (1) used by the legacy LTE systems, and control the transmission power of the PUSCH.

More specifically, the user terminal only needs to control the transmission power of the PUSCH in all symbols in the slot in Figs. 2A and 2B based on at least one of the maximum transmission power ($P_{CMAX, c}(i)$), the bandwidth ($M_{PUSCH, c}(i)$) allocated to the PUSCH, the target received power parameter ($P_{0\_PUSCH, c}(j)$), the weight coefficient ($\alpha_c(j)$) of the fractional TPC, the path loss ($PL_c$), the offset ($\Delta_{TF, c}(i)$) based on the MCS to be applied to the PUSCH, and the correction value ($f_c(i)$) of the TPC command.

According to second transmission power control, even when the PUCCH resources are reserved and therefore a bandwidth (the number of PRBs) that can be used for transmission of the PUSCH decreases, it is possible to make the transmission power of the PUSCH substantially fixed between the symbols in the slot. As a result, even in the cases illustrated in Figs. 2A and 2B, a PSD in the last symbol in the slot increases compared to the other symbols. Thus, by making the transmission power substantially fixed between the symbols in the slot, it is possible to reduce a strain of a waveform.

As described above, according to the present embodiment, the transmission power of the PUSCH in a given symbol in which the PUCCH resources have been reserved is controlled, so that it is possible to appropriately transmit the PUSCH while improving resource use efficiency.

In addition, a method for making the PSD or the transmission power fixed according to the first and second transmission power control has been described. However, a method for improving quality while permitting slight changes may be applied. When, for example, part of resources to which the PUSCH has been allocated is reserved resources, the number of PRBs that can be used for transmission decreases, and therefore a code rate of data to be transmitted on the PUSCH increases. To guarantee this increase, power boosting may be performed according to an increase amount of the code rate. This can be realized by, for example, applying to the transmission power obtained by the first and second transmission power control an increase in the transmission power based on a ratio of the code rate of the data in a case where a scheduled PUSCH does not include the reserved resources, and the code rate of the data in a case where the scheduled PUSCH includes the reserved resources.

(Control of PUCCH Resources)

According to the present embodiment, the user terminal receives information (PUCCH resource information) indicating one or more reserved PUCCH resources. The one or more PUCCH resources may be configured to the user terminal by a higher layer signaling (e.g., RRC signaling), and/or may be indicated to the user terminal by a physical layer signaling (e.g., DCI). Furthermore, one or more PUCCH resource candidates may be configured to the user terminal by the higher layer signaling, and one of the candidates may be indicated to the user terminal by the physical layer signaling (e.g., DCI).

According to the present embodiment, the user terminal may control the PUCCH resources based on the amount of allocation resources (e.g., the number of PRBs) for the PUSCH indicated by the DCI, and the amount of reserved PUCCH resources (e.g., the number of PRBs).

When, for example, the number of resources (e.g., REs) that can be used for transmission of the PUSCH is a multiple of a power of 2, a multiple of a power of 3 or a multiple of a power of 5 in a given symbol (e.g., the last symbol of the slot) in which the PUCCH resources are reserved, the user terminal only needs to maintain the reserved PUCCH resources as is.

On the other hand, when the number of resources (e.g., REs) that can be used for transmission of the PUSCH is not the multiple of the power of 2, the multiple of the power of 3 or the multiple of the power of 5 in the given symbol (e.g., the last symbol of the slot) in which the PUCCH resources are reserved, the user terminal may expand the reserved PUCCH resources.

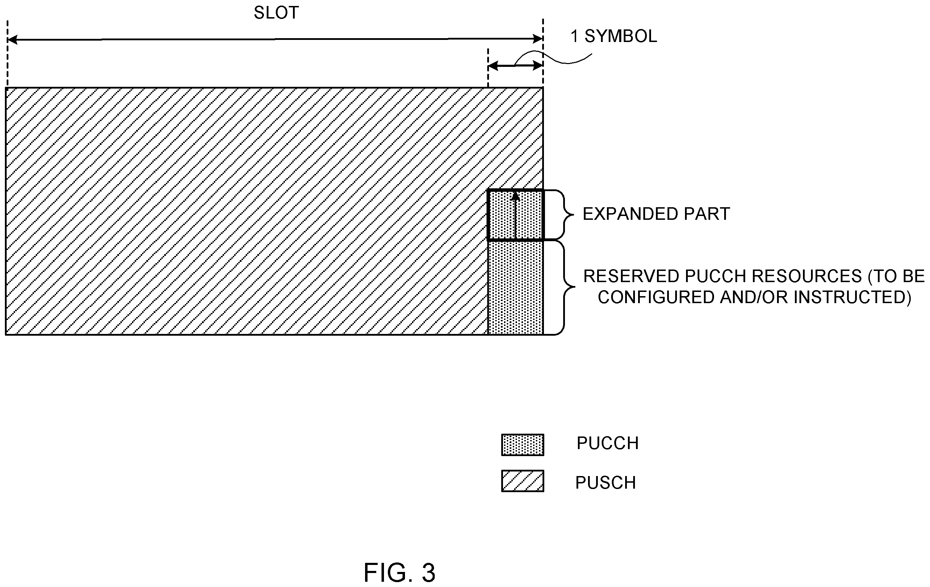

Fig. 3 is a diagram illustrating one example of control of PUCCH resources according to the present embodiment. Fig. 3 assumes that the PUCCH resources are configured by the higher layer signaling and/or indicated by the DCI. Furthermore, Fig. 3 assumes that, in the given symbol (the last symbol of the slot in this case) in which the PUCCH resources are reserved, the number of REs that can be used for transmission of the PUSCH is not the multiple of the power of 2, the multiple of the power of 3 or the multiple of the power of 5.

In the case illustrated in Fig. 3, the user terminal may expand the PUCCH resources such that the number of REs that can be used for transmission of the PUSCH is the multiple of the power of 2, the multiple of the power of 3 or the multiple of the power of 5 in the given symbol. Consequently, when the PUSCH is transmitted by using a DFT-spread-OFDM waveform, it is possible to prevent PUSCH transmission processing from being complicated by using the number of REs that is not the multiple of the power of 2, the multiple of the power of 3 or the multiple of the power of 5.

Furthermore, it is possible to allocate resources (allocate PRBs) to a PUSCH without taking into account a decrease in the number of REs for the PUSCH due to PUCCH resources reserved in a specific symbol, so that it is possible to prevent scheduling performed by a radio base station from being complicated.

(Others)

According to the present embodiment, both of the PUSCH and the PUCCH may be transmitted by using a DFT-spread-OFDM waveform. In this case, a subcarrier-spacing of the PUCCH may be made wider than a subcarrier-spacing of the PUSCH to include a plurality of symbols of the PUCCH per symbol of the PUSCH. Consequently, it is possible to include the PUCCH symbol and a Demodulation Reference Signal (DMRS) of the PUCCH in the 1 symbol of the PUSCH.

Furthermore, the DFT-spread-OFDM waveform may be used for the PUSCH, and an OFDM waveform may be used for the PUCCH. In this case, the PUCCH and the DMRS of the PUCCH may be subjected to frequency division multiplexing with different subcarriers in 1 symbol.

Alternatively, when the OFDM waveform is applied to both of the PUSCH and the PUCCH, the present embodiment may be applied. In this case, the PUSCH, a DMRS of the PUSCH, the PUCCH and the DMRS of the PUCCH may be subjected to frequency division multiplexing in a given symbol in which the PUCCH resources are reserved.

Alternatively, when the OFDM waveform is applied to the PUSCH, and the DFT-spread-OFDM waveform is used for the PUCCH, the present embodiment may be applied.

(Radio Communication System)

The configuration of the radio communication system according to the present embodiment will be described below. This radio communication system is applied the radio communication method according to each of the above aspect. In addition, the radio communication method according to each of the above aspect may be each applied alone or may be applied in combination.

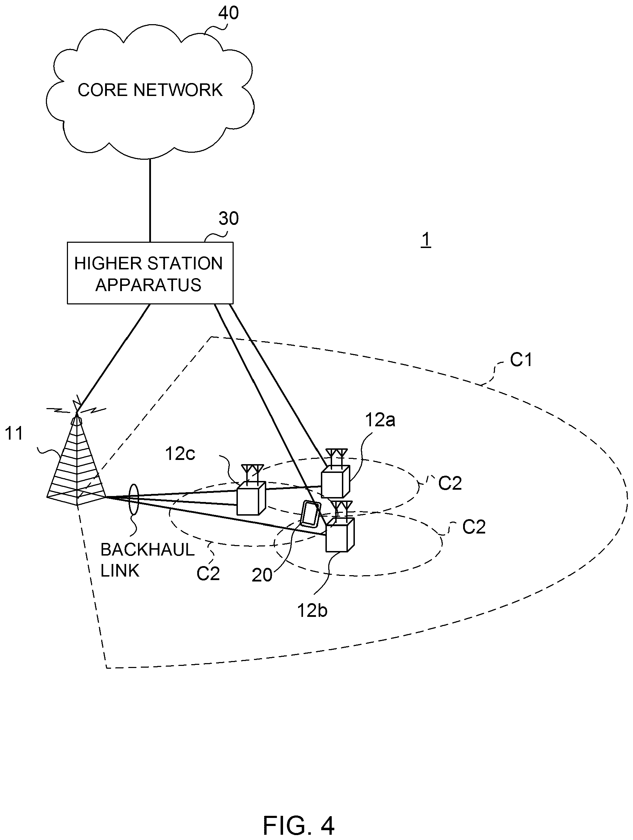

Fig. 4 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system. In this regard, the radio communication system 1 may be referred to as SUPER 3G, LTE-Advanced (LTE-A), IMT-Advanced, 4G, 5G, Future Radio Access (FRA) or New RAT (NR).

The radio communication system 1 illustrated in Fig. 4 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells. In this regard, the numerology refers to a communication parameter set that characterizes a signal design of a certain RAT and/or an RAT design.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two or more CCs). Furthermore, the user terminal can use licensed band CCs and unlicensed band CCs as a plurality of cells.

Furthermore, the user terminal 20 can communicate by using Time Division Duplex (TDD) or Frequency Division Duplex (FDD) in each cell. A TDD cell and an FDD cell may be each referred to as a TDD carrier (frame configuration type 2) and an FDD carrier (frame configuration type 1).

Furthermore, in each cell (carrier), one of a subframe (also referred to as, for example, a TTI, a general TTI, a long TTI, a general subframe, a long subframe or a slot) having a relatively long time duration (e.g., 1 ms) or a subframe (also referred to as, for example, a short TTI, a short subframe or a slot) having a relatively short time duration may be applied, or both of the long subframe and the short subframe may be applied. Furthermore, in each cell, a subframe of 2 or more time durations may be applied.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) can be configured to be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal but also a fixed communication terminal. Furthermore, the user terminal 20 can perform Device-to-Device communication (D2D) with the other user terminal 20.

The radio communication system 1 can apply Orthogonal Frequency-Division Multiple Access (OFDMA) to downlink (DL) and can apply Single Carrier-Frequency Division Multiple Access (SC-FDMA) to uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these, and OFDMA may be used on UL. Furthermore, SC-FDMA is applicable to Sidelink (SL) used for device-to-device communication.

The radio communication system 1 uses a DL data channel (also referred to as, for example, a PDSCH: Physical Downlink Shared Channel or a DL shared channel) shared by each user terminal 20, a broadcast channel (PBCH: Physical Broadcast Channel) and an L1/L2 control channel as DL channels. At least one of user data, higher layer control information and System Information Blocks (SIBs) is conveyed on the PDSCH. Furthermore, Master Information Blocks (MIBs) are conveyed on the PBCH.

The L1/L2 control channel includes a DL control channel (e.g., a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is conveyed on the PDCCH and/or the EPDCCH. The number of OFDM symbols used for the PDCCH is conveyed on the PCFICH. The EPDCCH is subjected to frequency division multiplexing with the PDSCH and is used to convey DCI similar to the PDCCH. Transmission acknowledgement information (A/N or HARQ-ACK) of the PUSCH can be conveyed on at least one of the PHICH, the PDCCH and the EPDCCH.

The radio communication system 1 uses a UL data channel (also referred to as, for example, a PUSCH: Physical Uplink Shared Channel or a UL shared channel) shared by each user terminal 20, a UL control channel (PUCCH: Physical Uplink Control Channel), and a random access channel (PRACH: Physical Random Access Channel) as UL channels. User data and higher layer control information are conveyed on the PUSCH. Uplink Control Information (UCI) including at least one of transmission acknowledgement information (A/N or HARQ-ACK) and Channel State Information (CSI) of the PDSCH is conveyed on the PUSCH or the PUCCH. A random access preamble for establishing connection with a cell can be conveyed on the PRACH.

<Radio Base Station>

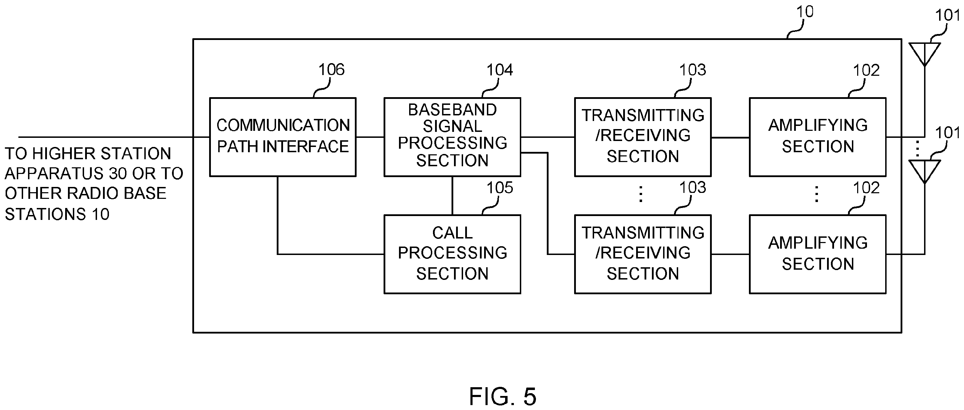

Fig. 5 is a diagram illustrating one example of an overall configuration of the radio base station according to the present embodiment. The radio base station 10 includes pluralities of transmission/reception antennas 101, amplifying sections 102 and transmitting/receiving sections 103, a baseband signal processing section 104, a call processing section 105 and a channel interface 106. In this regard, the radio base station 10 may be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., Hybrid Automatic Repeat reQuest (HARQ) processing), and transmission processing such as at least one of scheduling, transmission format selection, channel coding, rate matching, scrambling, Inverse Fast Fourier Transform (IFFT) processing, and precoding processing on the user data, and transfers the user data to each transmitting/receiving section 103. Furthermore, the baseband signal processing section 104 performs transmission processing such as channel coding and/or inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101.

The transmitting/receiving sections 103 can be composed of transmitters/receivers, transmission/reception circuits or transmission/reception apparatuses described based on a common knowledge in a technical field according to the present invention. In this regard, the transmitting/receiving sections 103 may be composed as an integrated transmitting/receiving section or may be composed of transmitting sections and receiving sections.

Meanwhile, each amplifying section 102 amplifies a radio frequency signal received by each transmission/reception antenna 101 as a UL signal. Each transmitting/receiving section 103 receives the UL signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on UL data included in the input UL signal, and transfers the UL data to the higher station apparatus 30 via the channel interface 106. The call processing section 105 performs at least one of call processing such as configuration and release of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmitting/receiving section 103 transmits a DL signal (e.g., at least one of DCI (a DL assignment for scheduling DL data and/or a UL grant for scheduling UL data), DL data, a DL reference signal and higher layer control information), and receives a UL signal (e.g., at least one of UL data, UCI, a UL reference signal and higher layer control information).

Furthermore, each transmitting/receiving section 103 receives a UL data channel (e.g., PUSCH) and/or a UL control channel (e.g., PUCCH (a long PUCCH and/or a short PUCCH)). Furthermore, each transmitting/receiving section 103 may transmit information (PUCCH resource information) indicating PUCCH resources.

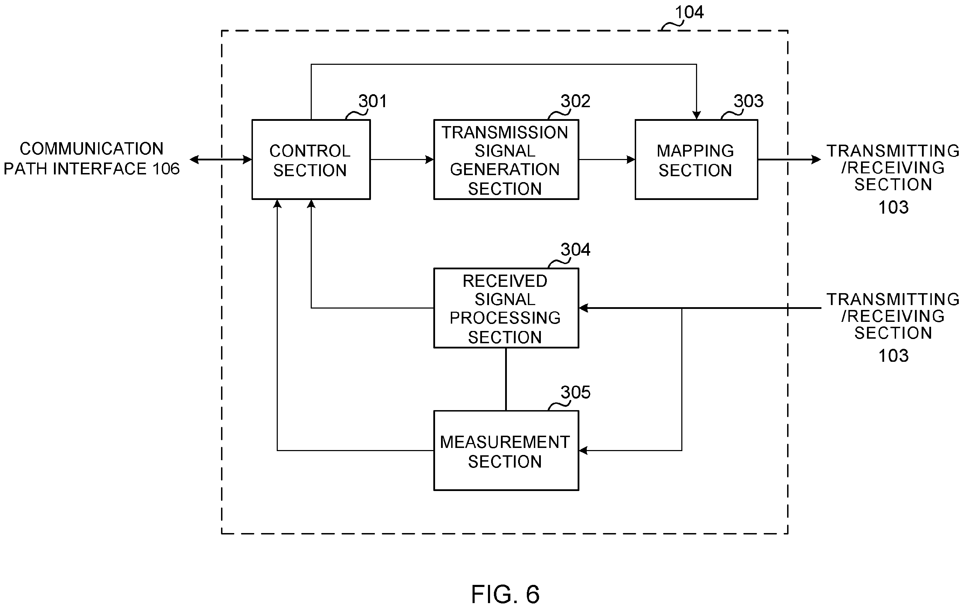

Fig. 6 is a diagram illustrating one example of a function configuration of the radio base station according to the present embodiment. In addition, Fig. 6 mainly illustrates function blocks of characteristic portions according to the present embodiment, and assumes that the radio base station 10 includes other function blocks, too, that are necessary for radio communication. As illustrated in Fig. 6, the baseband signal processing section 104 includes a control section 301, a transmission signal generating section 302, a mapping section 303, a received signal processing section 304 and a measurement section 305.

The control section 301 controls the entire radio base station 10. The control section 301 controls at least one of, for example, DL signal generation of the transmission signal generating section 302, DL signal mapping of the mapping section 303, UL signal reception processing (e.g., demodulation) of the received signal processing section 304, and measurement of the measurement section 305.

More specifically, the control section 301 schedules the user terminal 20. More specifically, the control section 301 may schedule the DL data channel and/or the UL data channel based on the UCI (e.g., HARQ-ACK) from the user terminal 20.

Furthermore, the control section 301 may control reservation of the PUCCH resources. More specifically, the control section 301 may control reservation of the PUCCH resources (and/or allocation resources for a PUSCH) such that the PUSCH is not transmitted by non-contiguous frequency resources. Furthermore, the control section 301 may control generation and/or transmission of the above PUCCH resource information.

The control section 301 may control reception of the PUSCH and/or the PUCCH from the user terminal 20 based on scheduling information and the PUCCH resource information of the PUSCH.

The control section 301 can be composed of a controller, a control circuit or a control apparatus described based on the common knowledge in the technical field according to the present invention.

The transmission signal generating section 302 generates a DL signal (including a DL data signal, a DL control signal or a DL reference signal) based on an instruction from the control section 301, and outputs the DL signal to the mapping section 303.

The transmission signal generating section 302 can be composed of a signal generator, a signal generating circuit or a signal generating apparatus described based on the common knowledge in the technical field according to the present invention.

The mapping section 303 maps the DL signal generated by the transmission signal generating section 302, on given radio resources based on the instruction from the control section 301, and outputs the DL signal to each transmitting/receiving section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a UL signal (including, for example, a UL data channel, a UL control channel and a UL reference signal) transmitted from the user terminal 20. More specifically, the received signal processing section 304 may output a received signal and/or a signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present invention.

The measurement section 305 may measure UL channel quality based on, for example, received power (e.g., Reference Signal Received Power (RSRP)) and/or received quality (e.g., Reference Signal Received Quality (RSRQ)) of a UL reference signal. The measurement section 305 may output a measurement result to the control section 301.

<User Terminal>

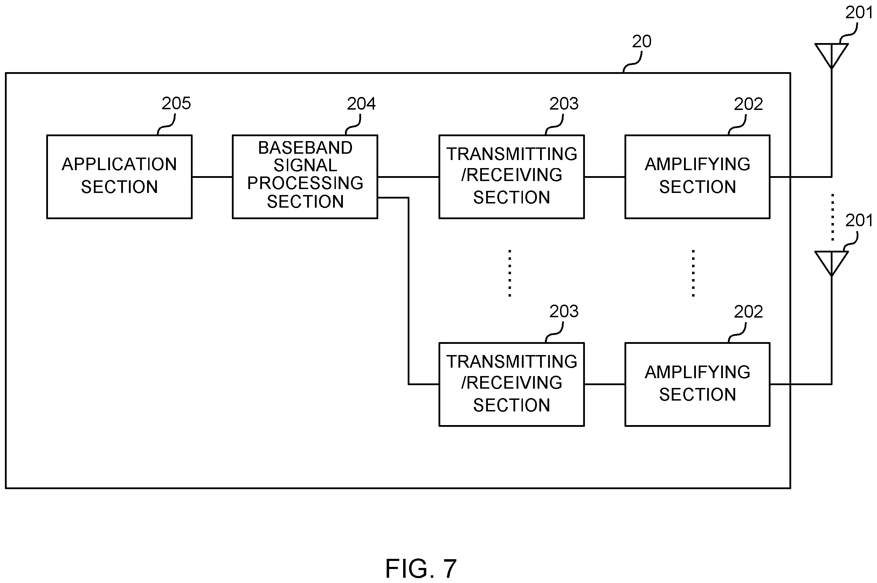

Fig. 7 is a diagram illustrating one example of an overall configuration of the user terminal according to the present embodiment. The user terminal 20 includes pluralities of transmission/reception antennas 201 for MIMO transmission, amplifying sections 202 and transmitting/receiving sections 203, a baseband signal processing section 204 and an application section 205.

The respective amplifying sections 202 amplify radio frequency signals received at a plurality of transmission/reception antennas 201. Each transmitting/receiving section 203 receives a DL signal amplified by each amplifying section 202. Each transmitting/receiving section 203 performs frequency conversion on the received signal into a baseband signal, and outputs the baseband signal to the baseband signal processing section 204.

The baseband signal processing section 204 performs at least one of FFT processing, error correcting decoding, and retransmission control reception processing on the input baseband signal. The baseband signal processing section 204 transfers DL data to the application section 205. The application section 205 performs processing related to layers higher than a physical layer and an MAC layer.

On the other hand, the application section 205 inputs UL data to the baseband signal processing section 204. The baseband signal processing section 204 performs at least one of retransmission control processing (e.g., HARQ processing), channel coding, rate matching, puncturing, Discrete Fourier Transform (DFT) processing and IFFT processing on the UL data, and transfers the UL data to each transmitting/receiving section 203. The baseband signal processing section 204 performs at least one of channel coding, rate matching, puncturing, DFT processing and IFFT processing on the UCI (e.g., at least one of A/N of the DL signal, Channel State information (CSI) and a Scheduling Request (SR)), and transfers the UCI to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

Furthermore, each transmitting/receiving section 203 receives the DL signal (e.g., at least one of the DCI (the DL assignment for scheduling the DL data and/or the UL grant for scheduling the UL data), the DL data, the DL reference signal and the higher layer control information), and transmits the UL signal (e.g., at least one of the UL data, the UCI, the UL reference signal and the higher layer control information).

Furthermore, each transmitting/receiving section 203 transmits the UL data channel (e.g., PUSCH) and/or the UL control channel (e.g., PUCCH (the long PUCCH and/or the short PUCCH)). Furthermore, each transmitting/receiving section 203 may receive the information (PUCCH resource information) indicating the PUCCH resource.

The transmitting/receiving sections 203 can be composed as transmitters/receivers, transmission/reception circuits or transmission/reception apparatuses described based on the common knowledge in the technical field according to the present invention. Furthermore, the transmitting/receiving sections 203 may be composed as an integrated transmitting/receiving section or may be composed of transmitting sections and receiving sections.

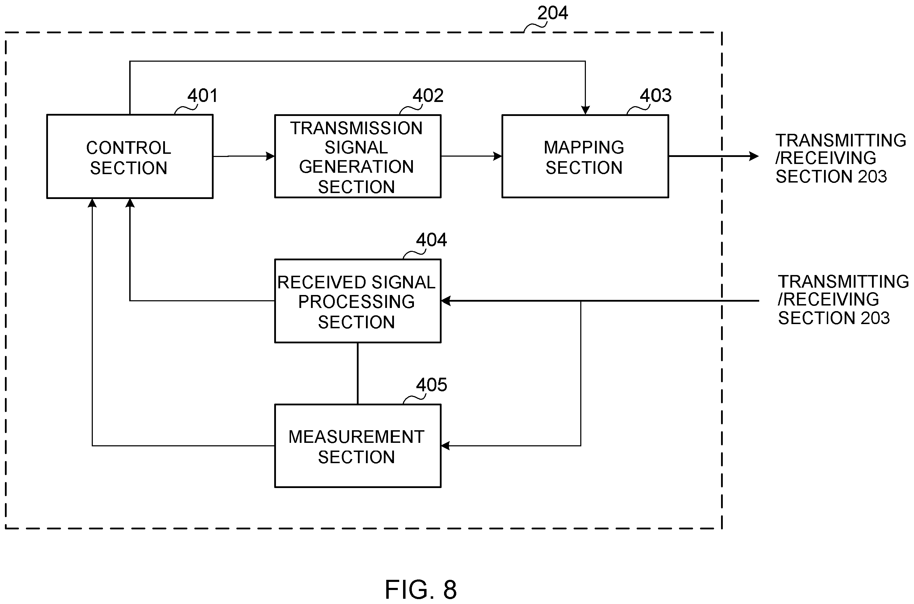

Fig. 8 is a diagram illustrating one example of a function configuration of the user terminal according to the present embodiment. In addition, Fig. 8 mainly illustrates function blocks of characteristic portions according to the present embodiment, and assumes that the user terminal 20 includes other function blocks, too, that are necessary for radio communication. As illustrated in Fig. 8, the baseband signal processing section 204 of the user terminal 20 includes a control section 401, a transmission signal generating section 402, a mapping section 403, a received signal processing section 404 and a measurement section 405.

The control section 401 controls the entire user terminal 20. The control section 401 controls at least one of, for example, UL signal generation of the transmission signal generating section 402, UL signal mapping of the mapping section 403, DL signal reception processing of the received signal processing section 404 and measurement of the measurement section 405.

The control section 401 may control transmission of the UL data channel in first resources indicated by the DCI. In at least part of the first resources, second resources for the UL control channel may be reserved such that the UL data channel is not transmitted by non-contiguous frequency resources.

The control section 401 may control transmission power of the UL data channel based on identical and/or different parameters to and/or from those of other symbols in which the second resources are not reserved in a given symbol in which the second resources are reserved.

The control section 401 may control the transmission power of the UL data channel such that a Power Spectral Density (PSD) is fixed or the transmission power per symbol is fixed between the given symbol in which the second resources are reserved and the other symbols in which the second resources are not reserved.

The control section 401 may control the second resources based on an amount of the first resources and an amount of the second resources.

The control section 401 may expand the second resources such that the number of resource elements that can be used for the UL data channel is a multiple of a power of 2, a multiple of a power of 3 or a multiple of a power of 5 in the given symbol in which the second resources are reserved.

The control section 401 can be composed of a controller, a control circuit or a control apparatus described based on the common knowledge in the technical field according to the present invention.

The transmission signal generating section 402 generates (e.g., encodes, rate-matches, punctures and modulates) a UL signal (including a UL data signal, a UL control signal, a UL reference signal and UCI) based on an instruction from the control section 401, and outputs the UL signal to the mapping section 403. The transmission signal generating section 402 can be composed of a signal generator, a signal generating circuit or a signal generating apparatus described based on the common knowledge in the technical field according to the present invention.

The mapping section 403 maps the UL signal generated by the transmission signal generating section 402, on radio resources based on the instruction from the control section 401, and outputs the UL signal to each transmitting/receiving section 203. The mapping section 403 can be composed of a mapper, a mapping circuit or a mapping apparatus described based on the common knowledge in the technical field according to the present invention.

The received signal processing section 404 performs reception processing (e.g., demapping, demodulation and decoding) on the DL signal (a DL data signal, scheduling information, a DL control signal or a DL reference signal). The received signal processing section 404 outputs information received from the radio base station 10 to the control section 401. The received signal processing section 404 outputs, for example, broadcast information, system information, higher layer control information of a higher layer signaling such as an RRC signaling and physical layer control information (L1/L2 control information) to the control section 401.

The received signal processing section 404 can be composed of a signal processor, a signal processing circuit or a signal processing apparatus described based on the common knowledge in the technical field according to the present invention. Furthermore, the received signal processing section 404 can compose the receiving section according to the present invention.

The measurement section 405 measures a channel state based on a reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

<Hardware Configuration>

In addition, the block diagrams used to describe the above embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

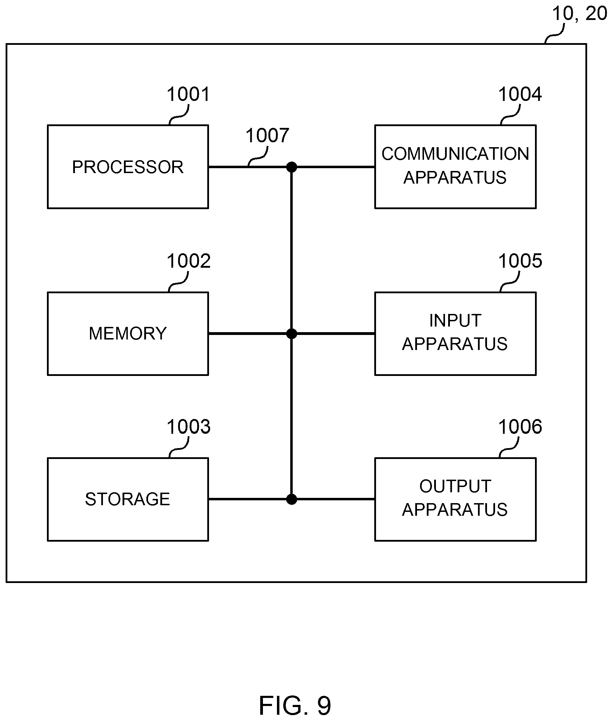

For example, the radio base station and the user terminal according to one embodiment of the present invention may function as computers that perform processing of the radio communication method according to the present invention. Fig. 9 is a diagram illustrating one example of the hardware configurations of the radio base station and the user terminal according to the present embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 1 or more processors concurrently, successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the present embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmitting/receiving sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using a bus that differs per apparatus.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

(Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain. Furthermore, the mini slot may be referred to as a sub slot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

Notification of information is not limited to the aspect/embodiment described in this description and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (Master Information Blocks (MIBs) and System Information Blocks (SIBs)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not notifying this given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description can be compatibly used.

In this description, the terms "Base Station (BS)", "radio base station", "eNB", "gNB", "cell", "sector", "cell group", "carrier" and "component carrier" can be compatibly used. The base station will be also referred to as a term such as a fixed station, a NodeB, an eNodeB (eNB), an access point, a transmission point, a reception point, a transmission/reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

The base station and/or the mobile station may be referred to as a transmission apparatus or a reception apparatus.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically, logically or by a combination of the physical and logical connections. For example, "connection" may be read as "access".

It can be understood that, when connected in this description, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an XOR.

The present invention has been described in detail above. However, it is obvious for a person skilled in the art that the present invention is not limited to the embodiment described in this description. The present invention can be carried out as modified and changed aspects without departing from the gist and the scope of the present invention defined based on the recitation of the claims. Accordingly, the disclosure of this description is intended for exemplary explanation, and does not bring any restrictive meaning to the present invention.

**Claims**

1. A user terminal comprising:

   a receiving section that receives Downlink Control Information (DCI); and
   a control section that controls transmission of an Uplink (UL) data channel in a first resource indicated by the DCI, wherein a second resource for an Uplink (UL) control channel is reserved in at least part of the first resource such that the UL data channel is not transmitted by a non-contiguous frequency resource.

2. The user terminal according to claim 1, wherein the control section controls transmission power of the UL data channel in a given symbol based on a parameter, the second resource being reserved in the given symbol, and the parameter being identical to and/or different from that of another symbol in which the second resource is not reserved.

3. The user terminal according to claim 2, wherein the control section controls the transmission power of the UL data channel such that a Power Spectral Density (PSD) is fixed or transmission power per symbol is fixed between the given symbol and the another symbol.

4. The user terminal according to any one of claims 1 to 3, wherein
the receiving section receives information indicating the second resource, and
the control section controls the second resource based on an amount of the first resource and an amount of the second resource.

5. The user terminal according to claim 4, wherein the control section expands the second resource such that a number of resource elements that can be used for the UL data channel is a multiple of a power of 2, a multiple of a power of 3 or a multiple of a power of 5 in the given symbol in which the second resource is reserved.

6. A radio communication method comprising at a user terminal:

   receiving Downlink Control Information (DCI); and
   controlling transmission of an Uplink (UL) data channel in a first resource indicated by the DCI,
   wherein a second resource for an Uplink (UL) control channel is reserved in at least part of the first resource such that the UL data channel is not transmitted by a non-contiguous frequency resource.

FIG. 1A

FIG. 1B

## FIG. 2A

SLOT

1 SYMBOL

PUCCH

PUSCH

## FIG. 2B

SLOT

1 SYMBOL

PUCCH

PUSCH

## FIG. 2C

SLOT

1 SYMBOL

PUCCH

PUSCH

## FIG. 2D

SLOT

1 SYMBOL

PUCCH

PUSCH

FIG. 3

40

CORE NETWORK

30

HIGHER STATION
APPARATUS

1

C1

11

12a

12c

C2

C2

BACKHAUL
LINK

C2    20

12b

FIG. 4

FIG. 5

FIG. 6

FIG. 7

EP 3 681 114 A1

FIG. 8

10, 20

1001

PROCESSOR

1007

1004

COMMUNICATION APPARATUS

1002

MEMORY

1005

INPUT APPARATUS

1003

STORAGE

1006

OUTPUT APPARATUS

FIG. 9

## INTERNATIONAL SEARCH REPORT

| | International application No. |
|---|---|
| | PCT/JP2017/032323 |

**A. CLASSIFICATION OF SUBJECT MATTER**
*H04L27/26(2006.01)i, H04W52/14(2009.01)i, H04W72/04(2009.01)i*

According to International Patent Classification (IPC) or to both national classification and IPC

**B. FIELDS SEARCHED**

Minimum documentation searched (classification system followed by classification symbols)
H04L27/26, H04W52/14, H04W72/04

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | ZTE, Multiplexing of PUSCH and short PUCCH, 3GPP TSG RAN WG1 Meeting #90, R1-1712456, Internet<URL:http://www.3gpp.org/ftp/tsg_ran/WG1_RL1/TSGR1_90/Docs/R1-1712456.zip>, 2017.08.12 | 1-6 |
| Y | Sharp, 5G NR short PUCCH considerations, 3GPP TSG RAN WG1 NR Ad Hoc Meeting, R1-1700730, Internet<URL:http://www.3gpp.org/ftp/tsg_ran/WG1_RL1/TSGR1_AH/NR_AH_1701/Docs/R1-1700730.zip>, 2017.01.10 | 1-6 |
| Y | Media Tek Inc., Multiplexing of PUCCH and other channels, 3GPP TSG RAN WG1 Meeting #87, R1-1612140, Internet<URL:http://www.3gpp.org/ftp/tsg_ran/WG1_RL1/TSGR1_87/Docs/R1-1612140.zip>, 2016.11.05 | 2,3 |

| ☒ | Further documents are listed in the continuation of Box C. | ☐ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 November 2017 (07.11.17) | 21 November 2017 (21.11.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2017/032323 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2010-4499 A  (NTT Docomo Inc.),<br>07 January 2010 (07.01.2010),<br>paragraphs [0044] to [0046]; fig. 15 to 17<br>& US 2011/0188467 A1<br>paragraphs [0085] to [0088]; fig. 15 to 17<br>& WO 2009/157367 A1    & EP 2293634 A1<br>& AU 2009263425 A       & KR 10-2011-0026446 A<br>& CN 102124799 A | 1-6 |
| A | Nokia, Nokia Shanghai Bell, On the multiplexing between PUCCHs and PUSCH, 3GPP TSG RAN WG1 #90, R1-1714081, Internet<URL:http://www.3gpp.org/ftp/tsg_ran/WG1_RL1/TSGR1_90/Docs/R1-1714081.zip>, 2017.08.11 | 1-6 |
| A | Ericson, sPUCCH power control, 3GPP TSG RAN WG1 #90, R1-1712902, Internet<URL:http://www.3gpp.org/ftp/tsg_ran/WG1_RL1/TSGR1_90/Docs/R1-1712902.zip>, 2017.08.11 | 2,3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010